## Europäisches Patentamt
## European Patent Office
## Office européen des brevets

(19)

(11) Veröffentlichungsnummer : **0 331 119 B1**

(12)

# EUROPÄISCHE PATENTSCHRIFT

(45) Veröffentlichungstag der Patentschrift :
03.06.92 Patentblatt 92/23

(51) Int. Cl.$^5$ : **B60R 22/42**

(21) Anmeldenummer : 89103514.9

(22) Anmeldetag : 28.02.89

(54) Gurtbandklemmvorrichtung.

(30) Priorität : 29.02.88 DE 3806449

(43) Veröffentlichungstag der Anmeldung :
06.09.89 Patentblatt 89/36

(45) Bekanntmachung des Hinweises auf die
Patenterteilung :
03.06.92 Patentblatt 92/23

(84) Benannte Vertragsstaaten :
DE ES FR GB IT SE

(56) Entgegenhaltungen :
WO-A-88/09274
DE-A- 3 543 959
DE-A- 3 613 430
US-A- 4 323 204

(73) Patentinhaber : **Autoliv-Kolb GmbH & Co.**
**Theodor-Heuss-Strasse 2**
**W-8060 Dachau (DE)**

(72) Erfinder : **Knabel, Walter, Dr.**
**Nockstrasse 13**
**W-8110 Murnau (DE)**
Erfinder : **Mayer, Josef**
**Eschenstrasse 86**
**W-8044 Unterschleissheim (DE)**
Erfinder : **Notar, Walter**
**Valerystrasse 43**
**W-8044 Unterschleissheim (DE)**

(74) Vertreter : **Zinnecker, Armin, Dipl.-Ing.**
**Lorenz-Seidler-Gossel et al**
**Widenmayerstrasse 23**
**W-8000 München 22 (DE)**

## Beschreibung

Die Erfindung betrifft eine Gurtbandklemmvorrichtung für ein Sicherheitsgurtsystem mit einer von mindestens einem Beschleunigungssensor gesteuerten Blockiereinrichtung, die eine Gegendruckwange und ein Klemmglied zur Festlegung des Gurtbandes und zur Verhinderung eines weiteren Gurtbandauszuges enthält, welches mit Zähnen versehen ist, die in das Gewebe des Gurtbandes eindringen, und die weiterhin eine Steuereinrichtung aufweist, die beim Ansprechen eines oder mehrerer Sensoren das Klemmglied in Anlage an das Gurtband bringt.

Aus der DE-OS 55 43 959 ist eine Gurtbandklemmvorrichtung nach dem Oberbegriff des Hauptanspruches bekannt. Es hat sich nun herausgestellt, daß es nicht zu vermeiden ist, daß sich im Crashfall bei voll eingesteuertem Klemmglied die Gegendruckwange leicht verformt. Dadurch entsteht zwischen Klemmglied und Gegendruckwange ein Spalt mit einseitig konvex ausgebildetem Querschnitt. Eine echte Klemmung des Gurtbandes tritt folglich nur in den Randbereichen ein, während das Gurtband in der Mitte lediglich durch die in das Gewebe eindringenden Zähne gehalten wird. Dadurch dehnt sich das Gurtband in der Mitte und die gesamte Zuglast verlagert sich in die Randbereiche. Die Folge davon ist, daß das Gurtband bereits bei verhältnismäßig niedrigen Belastungen vom Rand her einzureißen beginnt.

Um diesem Mißstand abzuhelfen, wurde bereits vorgeschlagen, die Zähne in der Mitte des Klemmgliedes höher auszulegen, als in den Randbereichen, so daß die Zahnspitzen in einer gewölbten Ebene liegen. Dies hat jedoch dazu geführt, daß bei Klemmeinleitungen bei niedrigeren Belastungen nur die mittleren Zähne zum Eingriff kommen. Die auf diese Zähne einwirkende Belastung ist dann aber so hoch, daß es oft zu Ausbrüchen dieser Zähne kommt. Wenn dann im Ernstfall das Klemmglied voll eingesteuert wird, sind in der Mitte dann nur noch so wenige Zähne vorhanden, daß der o.g. Effekt noch wesentlich deutlicher zu Tage tritt.

Auch bei einer neuwertigen Klemmbacke dieser Art, ohne Zahnausbrüche in der Mitte, tritt der gewünschte Erfolg jedoch nicht ein. Wird das Klemmglied voll eingesteuert, entsteht zwar kein Spalt zwischen Zahnspitzen und Gegendruckwange, da sich die in der Mitte längeren Zähne an die Durchbiegung der Gegendruckwange anpassen, es kommt aber in diesem Bereich keine FLächenpressung und damit keine Klemmung zustande.

Ein weiterer Nachteil zeigt sich bei einem vorgeschriebenem Dauertest, bei dem das Gurtband mit geringer Belastung immer an der gleichen Stelle geklemmt wird. Durch den Umstand, daß nur immer die mittleren Zähne zum Eingriff kommen und sich die Last dadurch nur auf die mittleren Zähne und die Schuß- und Kettfäden in der Mitte des Gurtbandes verteilt, kommt es in diesem Bereich zu so starken Aufrauhungen des Bandes, daß die vorgeschriebene Festigkeit nicht mehr gegeben ist.

Es ist die Aufgabe der Erfindung, eine Gurtbandklemmvorrichtung der angegebenen Art zu schaffen, die im Crashfall eine Klemmung des Gurtbandes über die gesamte Breite des Klemmglieds gewährleistet und sicherstellt, daß im normalen Blokkierfall zur Schonung des Gurtbandes die Gesamtlast auf alle Zähne verteilt wird.

Erfindungsgemäß wird diese Aufgabe bei einer Gurtbandklemmvorrichtung der gattungsgemäßen Art dadurch gelöst, daß der Zahngrund des Klemmgliedes ballig ausgebildet ist, während sich die Zahnspitzen in einer Ebene befinden. Bei Blockierungen mit geringer Last wirkt das Klemmglied wie herkömmliche Klemmglieder und greift mit allen Zähnen gleichzeitig in das Gurtband ein. Im Dauerversuch kommt es dabei nur zu einer minimalen Auffaserung des Gurtbandes. Im Crashfall wenn das Klemmglied vollkommen eingesteuert wird, verläuft der ballig geformte Zahngrund dann parallel zu der verformten Gegendruckwange. Die äußeren Zähne, die aufgrund der Form des Zahngrundes länger als die Zähne in der Mitte des Klemmgliedes sind, brechen dabei wegen der höheren Druckkraft auf die Zähne und der Reibung an der Gegendruckwange definiert ab, so daß sich die Zahnspitzen und die Bruchkanten dann in der Ebene befinden, die durch die verformte Gegendruckwange gebildet wird. Das Gurtband wird dadurch auf seiner gesamten Breite gleichmäßig geklemmt, und es entstehen keine unterschiedlichen Belastungen. Die Folge davon ist, daß das Gurtband erst bei wesentlich höheren Belastungen reißt.

Um die Ausfaserung des Gurtbandes während des Dauertests zu verhindern, sollte die Last auf möglichst viele Zähne verteilt werden, d.h. die Zähne sollten so angeordnet sein, daß sich die größte Packungsdichte ergibt. Um einen möglichst schonenden Eingriff der Zähne in das Gurtband zu gewährleisten, sollten diese nur sehr geringfügig oder gar nicht entgegen der Gurtbandabzugsrichtung ausgerichtet sein. Die geringste Verletzung des Gurtbandes tritt ein, wenn die der Abzugsrichtung entgegengerichtete Zahnflanke keine Hinterschneidung aufweist, also mit dem Zahngrund einen Winkel von 90 Grad bildet. In diesem Fall ist bei gleicher Grundfläche des Zahnfußes der Durchmesser der in das Band getriebenen Öffnung am geringsten. Ist der Winkel größer als 90 Grad, kann es dazu kommen, daß eine Kraftkomponente entsteht, die das Klemmglied aus seiner eingerückten Stellung in entgegengesetzter Richtung wieder hinausdrückt. Die Folge wäre ein Schlupf des Gurtbandes relativ zum Klemmglied.

Die Zahnform muß so gewählt werden, daß beim Eingriff in das Band keine Schuß- oder Kettfäden zerschnitten werden, sondern sich die Öffnung nach dem Eingriff wieder schließen kann. Eine weitere Anforderung ist, daß die Zähne mit minimaler Grundfläche maximale Festigkeit erreichen.

In einem bevorzugten Ausführungsbeispiel der Erfindung haben die einzelnen Zähne die Form eines schiefgeschnittenen geraden Kreiskegels. Die Mantellinie des Kegels, die der Gurtbandauszugsrichtung entgegengesetzt ist, steht senkrecht auf dem Zahngrund. Durch die elliptische Grundfläche bedingt, ergibt sich bei einem Spitzenwinkel von 50 Grad die größte Packungsdichte, wenn die Spitzen der Zähne auf einer Linie lie gen, die mit der unteren Kante des Klemmgliedes einen Winkel von ca. 62,5 Grad einschließt.

Die Gegendruckwange einer Gurtbandklemmvorrichtung deformiert sich unter Last nicht nur quer zur Gurtbandauszugsrichtung, sondern um einen minimalen Betrag auch in Längs richtung. Das hat zur Folge, daß das Gurtband an der Ober- und Unterkante des Klemmgliedes unter geringfügig höherem Preßdruck steht und daher an der Oberkante zuerst zu reißen beginnt. Durch eine Vergrößerung der Zahnhöhe im oberen Randbereich des Klemmgliedes läßt sich auch in Gurtbandabzugsrichtung die Last besser auf die gesamte Klemmfläche verteilen.

Ausführungsbeispiele der Erfindung werden nachstehend anhand der Zeichnung näher erläutert. Es zeigt

Figur 1 die Seitenansicht einer erfindungsgemäßen Gurt bandklemmvorrichtung mit einem Klemmglied, das als Klemmkeil ausgebildet ist,

Figur 2 den Klemmkeil der Gurtbandklemmvorrichtung nach Figur 1 in perspektivischer Darstellung,

Figur 3 eine Ansicht der Klemmfläche des Klemmgliedes eines erfindungsgemäßen Ausführungsbeispieles

Figur 4 a - e erfindungsgemäße Zahnformen,

Figur 5 a - c Querschnitte durch die Klemmfläche eines Klemmgliedes nach Figur 3 entlang der Linie A-A, mit verschiedenen Zahngeometrien.

Figur 6 Querschnitt durch die Klemmfläche eines Klemmgliedes nach Figur 3 entlang der Linie B-B

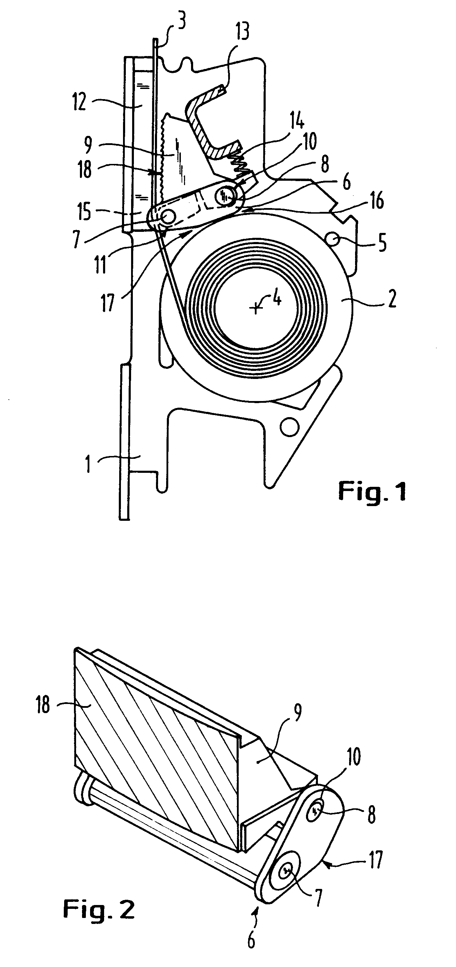

Die Figur 1 zeigt die in einem Gehäuse 1 drehbar gelagerte Wickelwelle 2 mit aufgespultem Gurtband 3. Die Achse 4 der Wickelwelle ist um den Punkt 5 im Gehäuse 1 schwenkbar. Der Steuerhebel 6 ist um die Achse 7 ebenfalls drehbar am Gehäuse gelagert. Über die Achse 8 ist der Steuerhebel 6 gelenkig mit dem Klemmkeil 9 verbunden. Die Achse 8 wird in dem Langloch 10 geführt. Der Steuerhebel 6 ist am Anschlag 15 mit dem Radius 11 versehen, der als Gurtbandführung wirkt und das Gurtband 3 an der Gegendruckwange 12 führt. Der Klemmkeil 9 wird an der U-Schiene 13 geführt und von der Feder 14 in seiner Ruhelage gehalten. Der Anschlag 15 schränkt die Bewegung des Klemmkeils in Richtung Wickelwelle 2 ein, so daß zwischen dieser und dem Steuerhebel 6 ein Spalt 16 bestehen bleibt.

Die Funktionsweise der erfindungsgemäßen Gurtbandklemmvorrichtung wird wie folgt beschrieben:

Durch in der Zeichnung nicht dargestellte Sensoren wird die Spule 2 blockiert. Wird nun weiterhin Gurtband abgezogen, so bewegt sich die Achse 4 der Wickelwelle 2 auf einer Kreisbahn um den Punkt 5 am Gehäuse 1. Nach Überwindung des Spaltes 16 berührt die Wickelwelle 2 die Steuerkante 17 des Steuerhebels 6. Bei weiterem Gurtbandabzug gleitet die Steuerkante 17 auf der Wickelwelle 2 und der Steuerhebel 6 wird um die Achse 7 nach oben verschwenkt. Dabei drückt er auch den Klemmkeil 9 entgegen der Kraft der Feder 14 nach oben.

Sobald der Klemmkeil mit seiner Klemmfläche 18 das Gurtband berührt, greifen die Zähne 19 in das Gewebe des Gurtbandes ein. Bei einem weiteren Gurtbandabzug wird der Keil 9 durch das Gurtband 3 in seine Klemmstellung gezogen.

Die Erfindung beschränkt sich jedoch nicht auf das hier gezeigte Beispiel, bei dem ein keilförmiges Klemmglied an einer Führung entlang bewegt wird, sondern sie bezieht sich selbstverständlich ebenfalls auf Gurtbandklemmvorrichtun gen, in denen z.B. ein um eine Achse schwenkbares Klemmglied Verwendung findet.

In Figur 2 wurden aus Gründen der Übersichtlichkeit die Zähne auf der Klemmfläche 18 nicht dargestellt, sondern nur deren Anordnung durch Linien angedeutet. Der sichtbare Zahngrund ist ballig ausgebildet.

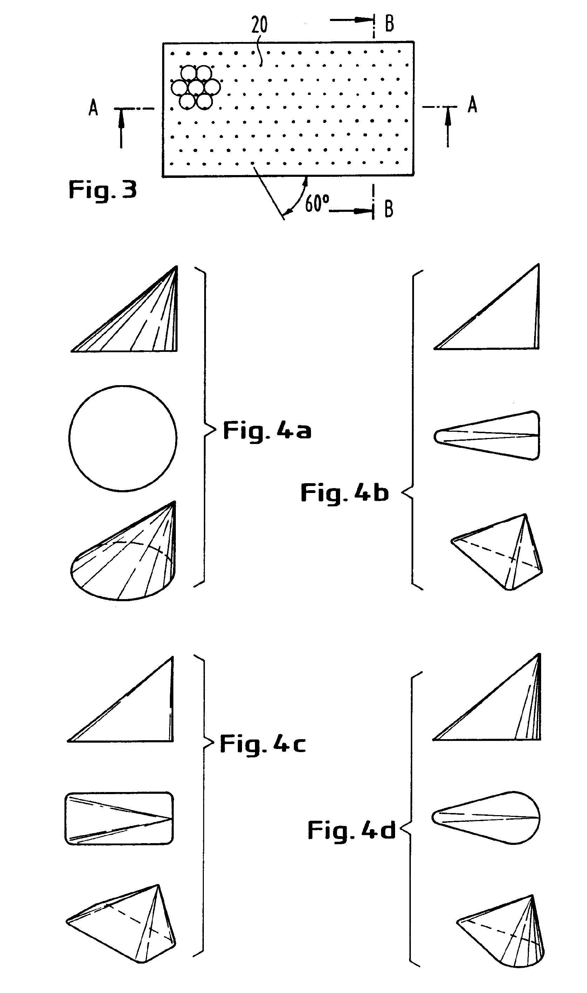

Figur 3 zeigt schematisch dargestellt die Ansicht einer Klemmfläche eines erfindungsgemäßen Klemmgliedes. Die Zähne, hier mit kreisförmiger Grundfläche, deren Spitzen 20 mit Punkten angedeutet sind, sind so angeordnet, daß sich die größte Packungsdichte ergibt. Hierzu bildet eine Linie, die die Spitzen einer Zahnreihe miteinander verbindet mit einer Geraden senkrecht zur Gurtabzugsrichtung einen 60-Grad-Winkel. Durch diese Verteilung der Zähne auf der Klemmfläche ist gewährleistet, daß die Last auf möglichst viele Zähne verteilt wird und sich ebenso gleichmäßig auf das Gewebe des Gurtbandes verteilt.

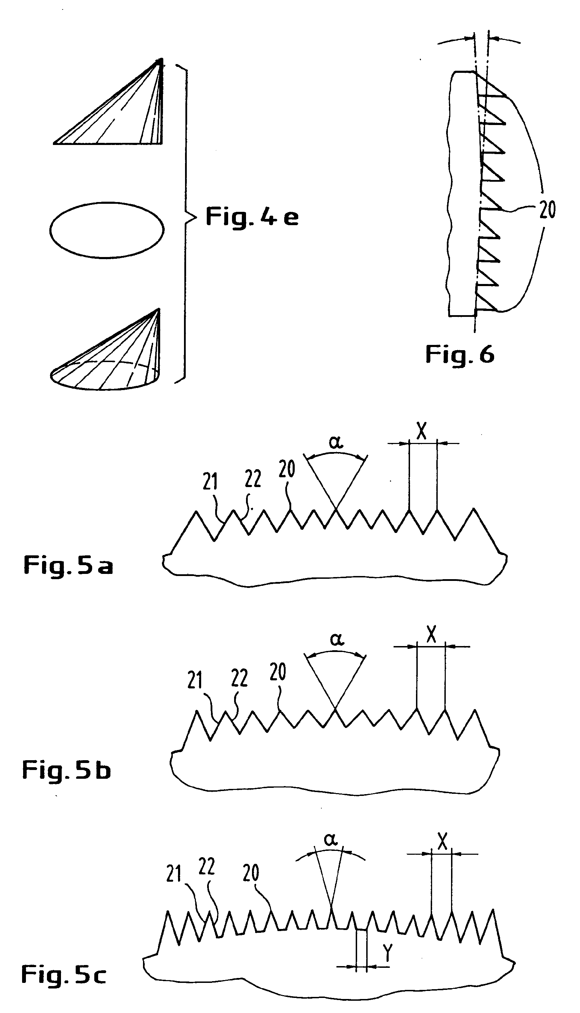

In der Figur 4 sind besonders vorteilhafte Zahnformen für das Klemmglied dargestellt.

Figur 4a zeigt einen Zahn mit der Form eines schiefen Kegels, dessen Spitze sich senkrecht auf den Umfang der Grundfläche projizieren läßt.

Figur 4b zeigt einen Zahn in der Form einer schiefen, 3-seitigen Pyramide, deren eine Seite senkrecht auf einer Grundlinie steht.

Figur 4c zeigt einen Zahn in der Form eines schiefen Tetraeders, dessen eine Seitenfläche ebenfalls senkrecht auf einer Grundlinie steht.

Werden Zahnformen nach den Figuren 4b und 4c verwendet, ist es von Vorteil, die Kanten abzurunden, um zu verhindern, daß beim Eingriff des Zahnes in das Gewebe evtl. Kett- oder Schußfäden durchschnitten werden.

Figur 4d zeigt einen Zahn, dessen Grundfläche elypsenförmig gestaltet ist. Die Spitze des Zahnes liegt senkrecht über dem Punkt des Umfanges der Grundfläche, der vom größten Durchmesser der Elypse geschnitten wird und vom Mittelpunkt der Grundfläche aus entgegen der Gurtbandauszugsrichtung liegt.

Besonders vorteilhaft wirkt sich die Verwendung einer Zahnform aus, wie sie in Figur 4e dargestellt ist. Die Grundfläche dieses Zahnes ist annähernd tropfenförmig gestaltet. Die Spitze des Zahnes läßt sich senkrecht auf den Punkt des Umfanges der Grundfläche projezieren, in dem dieser vom größten Durchmesser der Grundfläche geschnitten wird. Auch hier empfiehlt es sich die entstehende scharfe Kante abzurunden. Diese Zahnform weist an der Seite, die dem Gurtbandabzug entgegengerichtet ist eine weite Rundung auf, so daß der Eingriff in das Gewebe sehr schonend erfolgen kann. An der Rückseite des Zahnes, also in der Richtung, in der Scherkräfte auf den Zahn einwirken, befindet sich eine Stützkante, die dem Zahn - gegenüber der Kegelform - zusätzlichen Halt gibt. Auf diese Art können die Zähne sehr schlank ausgebildet werden, was wiederum zur Folge hat, daß die Zahl der Zähne auf der Klemmfläche erhöht werden kann.

Figur 5 zeigt Querschnitte durch verschiedene erfindungsgemäße Klemmglieder.

In der Figur 5a schließen die Zahnflanken 21 und 22 in der Zahnspitze 20 einen Winkel $\alpha$ ein, der über die gesamte Breite des Klemmkeils konstant bleibt. Wenn sich die Grundflächen der Zähne berühren, so ergibt sich daraus, daß der Abstand x zwischen den Zahnspitzen 20 von der Mitte aus nach außen hin ständig zunimmt.

In der Figur 5b ist der Abstand x der Zahnspitzen 20 über die gesamte Breite des Klemmgliedes gleichbleibend. Wenn sich die Grundflächen der Zähne berühren, muß sich der von den Zahnflanken 21 und 22 eingeschlossene Winkel $\alpha$ so verändern, daß sein Wert von innen nach außen abnimmt.

In Figur 5c sind die Abstände x der Zahnspitzen 20 und die von den Zahnflanken 21 und 22 eingeschlossenen Winkel $\alpha$ über die gesamte Breite des Klemmgliedes gleichbleibend. Hierdurch ergibt sich ein Abstand y der Grundflächen der Zähne auf dem Zahngrund voneinander, der von der Mitte nach außen hin abnimmt.

Figur 6 zeigt einen Schnitt entlang der Linie B-B in der Figur 3. Der Zahngrund verläuft hier im oberen Drittel leicht schräg, so daß in diesem Bereich die Zahnhöhe nach außen hin leicht zunimmt. Die Zahnspitzen 20 liegen auch hier in einer Ebene.

## Patentansprüche

1. Gurtbandklemmvorrichtung für ein Sicherheitsgurtsystem mit einer von mindestens einem Beschleunigungssensor gesteuerten Blockiereinrichtung, die eine Gegendruckwange (12) und ein Klemmglied (9) zur Festlegung des Gurtbandes (3) und zur Verhinderung eines weiteren Gurtbandauszuges enthält, welches mit Zähnen versehen ist, die in das Gewebe des Gurtbandes (3) eindringen und die weiterhin eine Steuereinrichtung (6) aufweist, die beim Ansprechen eines oder mehrerer Sensoren das Klemmglied (9) in Anlage an das Gurtband bringt,
**dadurch gekennzeichnet,**
daß die Zahnspitzen (20) in einer Ebene liegen, während der Zahngrund quer zur Gurtbandauszugsrichtung eine ballige Wölbung aufweist.

2. Klemmglied nach Anspruch 1, dadurch gekennzeichnet, daß die Wölbung des Zahngrundes der Klemmfläche (18) so ausgebildet ist, daß die Höhe der Zähne von der Mitte nach außen um ca. 1/3 zunimmt.

3. Klemmglied nach Anspruch 1 oder 2, dadurch gekennzeichnet, daß die Zähne in Reihen angeordnet sind, die mit einer Geraden, senkrecht zur Gurtabzugsrichtung einen Winkel bilden, durch den sich entsprechend der Zahnform die größte Packungsdichte ergibt.

4. Klemmglied nach einem der Ansprüche 1 bis 3, dadurch gekennzeichnet, daß bei einem querschnitt des Klemmgliedes (9) in einer Linie senkrecht zur Gurtbandauszugsrichtung der von den Zahnflanken eingeschlossene Winkel über die gesamte Breite des Klemmgliedes konstant bleibt und sich der Abstand der Zahnspitzen (20) von innen nach außen vergrößert.

5. Klemmglied nach einem der Ansprüche 1 bis 3, dadurch gekennzeichnet, daß bei einem querschnitt des Klemmgliedes in einer Linie senkrecht zur Gurtbandauszugsrichtung der von den Zahnflanken eingeschlossene Winkel von der Mitte nach außen hin kleiner wird, und der Abstand zwischen den Zahnspitzen konstant bleibt.

6. Klemmglied nach einem der Ansprüche 1 bis 3, dadurch gekennzeichnet, daß bei einem querschnitt des Klemmgliedes in einer Linie senkrecht zur Gurtbandabzugsrichtung der von den Zahnflanken (21, 22) eingeschlossene Winkel (α) und der Abstand zwischen den Zahnspitzen (20) konstant bleibt und, daß auf dem Zahngrund zwischen den einzelnen Zähnen ein Abstand besteht, der sich von der Mitte nach außen hin verringert.

7. Klemmglied nach Anspruch 1, dadurch gekennzeichnet, daß die Zähne nicht, oder nur minimal, entgegen der Gurtbandauszugsrichtung geneigt sind.

8. Klemmglied nach Anspruch 1, dadurch gekennzeichnet, daß die Spitze (20) eines jeden Zahns senkrecht über dem Schnittpunkt liegt, der aus der Umfangslinie der Grundfläche und einer Linie vom Mittelpunkt der Grundfläche entgegen der Gurtbandauszugsrichtung festgelegt ist.

9. Klemmglied nach Anspruch 8, dadurch gekennzeichnet, daß die Zähne die Form eines schiefen Kegels aufweisen.

10. Klemmglied nach Anspruch 8, dadurch gekennzeichnet, daß die Grundfläche der Zähne die Form einer Elypse aufweisen, deren größter Durchmesser in Richtung des Gurtbandauszugs liegt.

11. Klemmglied nach Anspruch 8, dadurch gekennzeichnet, daß die Zähne die Form einer dreiseitigen Pyramide aufweisen, deren eine Seitenfläche senkrecht auf der Grundfläche steht.

12. Klemmglied nach Anspruch 8, dadurch gekennzeichnet, daß die Zähne die Form eines Tetraeders aufweisen, dessen eine Seitenfläche senkrecht zu der Grundfläche steht.

13. Klemmglied nach Anspruch 8, dadurch gekennzeichnet, daß die Grundfläche der Zähne annähernd tropfenförmig ausgebildet ist, und der größte Durchmesser der Grundfläche in Richtung des Gurtbandauszuges liegt.

14. Klemmglied nach einem der Ansprüche 11 bis 13, dadurch gekennzeichnet, daß die Kanten der Zähne abgerundet sind.

15. Klemmglied nach Anspruch 1 oder einem der Ansprüche 3 bis 14, dadurch gekennzeichnet, daß der Zahngrund so ausgebildet ist, daß die Zahnhöhe im oberen Drittel des Klemmgliedes nach oben hin leicht zunimmt.

## Claims

1. A belt clamping apparatus for a seat belt system comprising a locking device controlled by at least one acceleration sensor and including a back-pressure plate (12) and a clamping element (9) for fixing the belt (3) and for preventing a further extraction of the belt, said clamping element (9) being provided with teeth biting into the material of the belt (3), and further being provided with a control device (6) which upon the response of one or several sensors moves the clamping element (9) against the belt,
**characterized in**
that the tooth crests (20) are disposed in one plane while the space between the teeth is provided with a crowning camber transversely to the direction in which the belt is extracted.

2. Clamping element according to claim 1, characterized in that the camber of the space between the teeth of the clamping surface (18) is formed such that the depth of the teeth increases by approximately 1/3 from the center towards the outside.

3. Clamping element according to claim 1 or 2, characterized in that the teeth are arranged in rows which form an angle with a straight line normal to the direction in which the belt is extracted, the maximum package density resulting from said angle in accordance with the tooth formation.

4. Clamping element according to anyone of claims 1 through 3, characterized in that for a cross-section of the clamping element (9) along a line normal to the direction in which the belt is extracted the angle defined by the tooth flanks remains constant over the entire width of the clamping element and the distance between the tooth crests (20) increases from inside to outside.

5. Clamping element according to anyone of claims 1 through 3, characterized in that for a cross-section of the clamping element along a line normal to the direction in which the belt is extracted the angle defined by the tooth flanks decreases from the center to the outside and the distance between the tooth crests remains constant.

6. Clamping element according to anyone of claims 1 through 3, characterized in that for a cross-section of the clamping element along a line normal to the direction in which the belt is extracted the angle (α) defined by the tooth flanks (21,22) and the distance between the tooth crests (20) remain constant, and that on the tooth gullet between the individual teeth there is a distance which decreases from the center towards the outside.

7. Clamping element according to claim 1, characterized in that there is no inclination or only a slight inclination of the teeth opposite to the direction in which the belt is extracted.

8. Clamping element according to claim 1, characterized in that the crest (20) of each tooth lies in a vertical position above the intersecting point determined by the circumferential line of the basis and a line from the central point of the basis opposite to the direction in which the belt is extracted.

9. Clamping element according to claim 7, characterized in that the teeth have the form of an oblique cone.

10. Clamping element according to claim 8, characterized in that the basis of the teeth has the form of an ellipse the maximum diameter of which lies in the direction of extraction of the belt.

11. Clamping element according to claim 8, characterized n that the teeth have the form of a triangular pyramid, one side of which extends vertically to the basis.

12. Clamping element according to claim 8, characterized in that the teeth have the form of a tetrahedron, one side of which extends vertically to the basis.

13. Clamping element according to claim 8, characterized in that the basis of the teeth is designed to be approximately drop-shaped, and the maximum diameter of the basis lies in the direction of extraction of the belt.

14. Clamping element according to anyone of claims 11 through 13, characterized in that the edges of the teeth are rounded off.

15. Clamping element according to claim 1 or anyone of claims 3 through 14, characterized in that the space between the teeth is formed such that the depth of the teeth is slightly increasing in the upper third of the clamping element in the upward direction.


**Revendications**

1. Dispositif de blocage de ceinture pour un système de ceinture de sécurité comprenant un dispositif de blocage commandé par au moins un capteur d'accélération et comportant une face de contre-pression (12) ainsi qu'un organe de serrage (9) pour fixer la ceinture (3) et pour empêcher une extraction supplémentaire de ceinture, qui est pourvue de dents qui rentrent dans le tissu de la ceinture (3) et qui présente par ailleurs un dispositif de commande (6) qui, lors de la sollicitation d'un ou de plusieurs capteurs, met l'organe de serrage (9) en prise avec la ceinture;
caractérisé en ce que
les pointes des dents (20) sont situées dans un plan tandis que la base des dents présente une courbure convexe transversale à la direction d'extraction de la ceinture.

2. Dispositif de serrage selon la revendication 1, caractérisé en ce que la courbure de la base des dents de la surface de serrage (18) est réalisé de façon que la hauteur des dents augmente d'un tiers environ du milieu vers l'extérieur.

3. Dispositif de blocage selon la revendication 1 ou 2, caractérisé en ce que les dents sont disposées en rangées qui forment un angle avec une droite perpendiculaire à la direction d'extraction de ceinture par lequel on obtient, conformément à la forme des dents la plus grande densité d'arrangement.

4. Dispositif de serrage selon l'une des revendications 1 à 3, caractérisé en ce que lors d'une section transversale du dispositif de blocage (9) suivant une ligne perpendiculaire à la direction d'extraction de la ceinture, l'angle formé par les flancs des dents reste constant sur toute la largeur du dispositif de blocage et que l'écart des pointes des dents (20) s'agrandit de l'intérieur vers l'extérieur.

5. Dispositif de blocage selon l'une des revendications 1 à 3, caractérisé en ce que lors d'une section transversale du dispositif de blocage suivant une ligne perpendiculaire à la direction d'extraction de la ceinture, l'angle formé par les flancs des dents devient plus petit du milieu vers l'extérieur, et que l'écart entre les pointes des dents reste constant.

6. Dispositif de blocage selon l'une des revendications 1 à 3, caractérisé en ce que lors d'une section transversale du dispositif de blocage suivant une ligne perpendiculaire à la direction de sortie de la ceinture, l'angle (α) formé par les flans des dents (21, 22) et l'écart entre les pointes des dents (20) reste constant et, qu'il existe à la base des dents entre les différentes dents un écart qui diminue au milieu vers l'extérieur.

7. Dispositif de serrage selon la revendication 1, caractérisé en ce que les dents ne sont pas inclinées ou sont inclinées seulement de façon minimale dans le sens opposé à la direction de sortie de la ceinture.

8. Dispositif de blocage selon la revendication 1, caractérisé en ce que la pointe (20) de chaque dent est située verticalement au-dessus du point d'intersection qui est déterminé à partir de la ligne de contour de la surface de base et d'une ligne du centre de la surface de base dans le sens opposé à la direction de sortie de la ceinture.

9. Dispositif de blocage selon la revendicaion 8, caractérisé en ce que les dents ont la forme d'un cône oblique.

10. Dispositif de blocage selon la revendication 8, caractérisé en ce que la surface de base des dents présente la forme d'une élipse dont le plus grand diamètre se situe dans la direction de la sortie de la ceinture.

11. Dispositif de blocage selon la revendication 8, caractérisé en ce que les dents ont la forme d'une pyramide à trois faces dont une face latérale est perpendiculaire à la surface de base.

12. Dispositif de blocage selon la revendication 8, caractérisé en ce que les dents on la forme d'un tétraèdre dont une face latérale est perpendiculaire à la surface de base.

13. Dispositif de blocage selon la revendication 8, caractérisé en ce que la surface de base des dents est réalisée approximativement sous forme de goutte, et que le plus grand diamètre de la surface de base se situe dans la direction de la sortie de la ceinture.

14. Dispositif de blocage selon l'une des revendications 11 à 13, caractérisé en ce que les arêtes des dents sont arrondies.

15. Dispositif de blocage selon la revendication 1 ou l'une des revendications 3 à 14, caractérisé en ce que la base des dents est réalisée de façon que la hauteur de dents augmente légèrement vers le haut, dans le tiers supérieur du dispositif de blocage.

Fig. 1

Fig. 2

Fig. 3

Fig. 4a

Fig. 4b

Fig. 4c

Fig. 4d

Fig. 4 e

20

Fig. 6

α

X

21   22   20

Fig. 5 a

α

X

21   22   20

Fig. 5 b

α

X

21   22   20

Y

Fig. 5 c

10